# EUROPEAN PATENT APPLICATION

(11) **EP 3 021 431 A1**
(43) Date of publication of application: **18.05.2016**
(21) Application number: 14878908.4
(22) Date of filing: 18.08.2014
(51) Int. Cl.: H01S 3/036

(54) **GAS LASER OSCILLATION APPARATUS, GAS LASER OSCILLATION METHOD, AND GAS LASER PROCESSING MACHINE**

(30) Priority: 15.01.2014 JP 2014004743
(71) Applicant: Panasonic Intellectual Property Management Co., Ltd., Osaka-shi, Osaka 540-6207 (JP)
(72) Inventor: MOCHIYAMA, Tomohiro, Osaka-shi, Osaka 540-6207 (JP); KOYAMA, Kenki, Osaka-shi, Osaka 540-6207 (JP); EGUCHI, Satoshi, Osaka-shi, Osaka 540-6207 (JP)
(74) Representative: Vigand, Philippe
(86) International application number: PCT/JP2014/004202
(87) International publication number: WO 2015/107570

(57) **Abstract**

A conventional gas laser oscillation apparatus cannot appropriately deal with an amount of laser gas introduced greater than normal use and can generate a turbulent flow around the total reflective mirror and the partial reflective mirror. This causes unstable discharge, resulting in unstable output of laser beams. The gas laser oscillation apparatus of the present disclosure has a laser oscillator, a first laser-gas inlet, a laser-gas outlet, a first laser-gas introducing port, a laser-gas circulation passage, and a second laser-gas introducing port. Disposed between a first discharge tube and any one of the total reflective mirror and a partial reflective mirror, the first laser-gas introducing port introduces laser gas into the laser oscillator. Disposed in the laser-gas circulation passage, the second laser-gas introducing port introduces laser gas into the laser-gas circulation passage. A laser-gas introducing section is connected to the first and the second laser-gas introducing ports.

## Description

### TECHNICAL FIELD

The present disclosure relates to a kilowatt-class axial-flow type gas laser oscillation apparatus, a gas laser oscillation method, and a gas laser processing machine, which are mainly used for sheet-metal cutting.

### BACKGROUND ART

Conventional axial-flow type gas laser oscillation apparatus 900 described in Patent Literature 1 will be described with reference to FIG. 6.

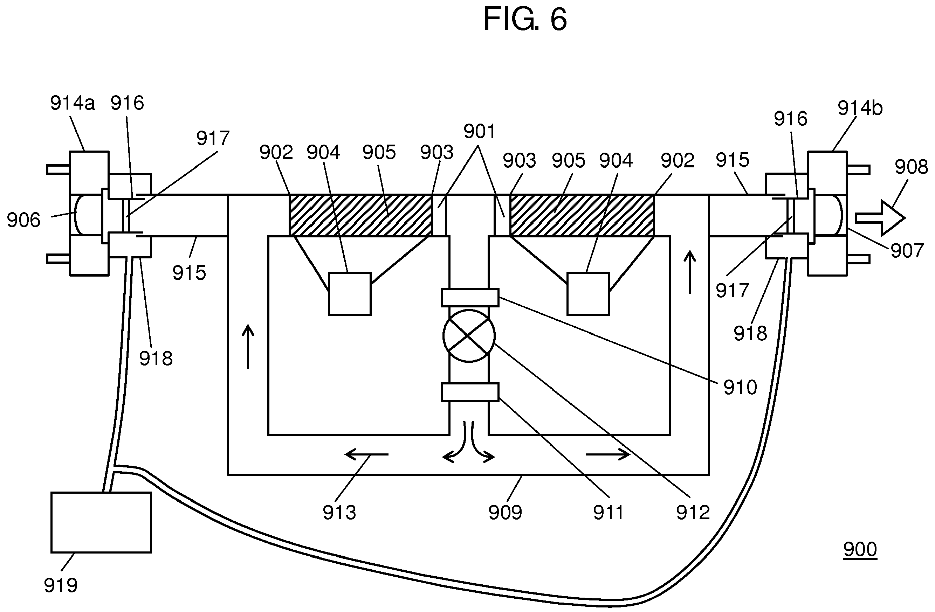

Gas laser oscillation apparatus 900 shown in FIG. 6 has discharge tube 901, electrodes 902 and 903 disposed in the periphery of discharge tube 901, and power source 904 connected to electrodes 902, 903.

Discharge space 905 is a space formed in discharge tube 901 and is sandwiched between electrode 902 and electrode 903. Total reflective mirror 906 and partial reflective mirror 907, which are disposed at the outside of both ends of discharge tube 901 respectively, form an optical resonator. Laser beam 908 is supplied from partial reflective mirror 907.

Laser-gas flow passage 909 is connected to discharge tube 901. Heat exchangers 910, 911 and blower 912 are disposed in laser-gas flow passage 909. Blower 912 circulates laser gas in a direction shown by arrow 913 in discharge tube 901 and laser-gas flow passage 909.

Total reflective mirror 906 is held by total-reflective-mirror holder 914a and is connected to the left end of a discharge area via non-discharge tube 915 and copper ring 916. Partial reflective mirror 907 is held by partial-reflective-mirror holder 914b and is connected to the right end of the discharge area via non-discharge tube 915 and copper ring 916.

Copper ring 916 has laser-gas inlet 917 opened like a slit. A section connecting between non-discharge tube 915 and copper ring 916 is covered with joint tube 918. Each joint tube 918-one is disposed on the side of total reflective mirror 906 and the other is disposed on the side of partial reflective mirror 907-is connected to laser-gas supply device 919.

According to gas laser oscillation apparatus 900, laser gas is supplied from laser-gas supply device 919 to discharge tube 901 via joint tube 918, laser-gas inlet 917 of copper ring 916, and non-discharge tube 915. By virtue of its shape of a slit, laser-gas inlet 917 prevents laser gas from generating a turbulent flow around total reflective mirror 906 and partial reflective mirror 907. This allows gas laser oscillation apparatus 900 to output laser beam 908 with stability.

When a gas laser oscillation apparatus is left unused for a long time, impurities, particularly water molecules attach to the discharge tube and the laser-gas flow passage of the gas laser oscillation apparatus. Restarting the gas laser oscillation apparatus under the condition above fails to offer stable discharge, decreasing output of laser beams. According to a known method to address the matter described above, the decrease in laser beam output is prevented by, for a predetermined period of time from the start of discharge, supplying the discharge tube and the laser-gas flow passage with an amount of laser gas greater than that used for normal operation.

### Citation List

### Patent Literature

PTL 1: Japanese Unexamined Patent Application Publication No. 2003-110171

### SUMMARY OF THE INVENTION

Such a slit-like laser gas inlet of the conventional laser gas oscillation apparatus nevertheless cannot deal appropriately with an amount of laser gas introduced greater than normal use and fails to prevent generation of a turbulent flow around the total reflective mirror and the partial reflective mirror. The turbulent flow of laser gas causes unstable discharge, resulting in unstable output of laser beams.

To address the problem above, the gas laser oscillation apparatus of the present disclosure has a laser oscillator, a first laser-gas inlet, a laser-gas outlet, a first laser-gas introducing port, a laser-gas circulation passage, and a second laser-gas introducing port. The laser oscillator has one of the total reflective mirror and the partial reflective mirror disposed at a first end, the other of the total reflective mirror and the partial reflective mirror disposed at a second end that is opposite to the first end, and a first discharge tube for exciting laser gas. The first laser-gas inlet, which is disposed between the partial reflective mirror and the first discharge tube, supplies the laser oscillator with laser gas. The laser gas outlet, which is disposed between the total reflective mirror and the first discharge tube, emits laser gas from the laser oscillator. The first laser-gas introducing port, which is disposed between the partial reflective mirror and the first discharge tube, introduces laser gas into the laser oscillator. The laser-gas circulation passage connects the first laser-gas inlet to the laser-gas outlet. The second laser-gas introducing port, which is disposed in the laser-gas circulation passage, introduces laser gas into the laser-gas circulation passage. A laser-gas introducing section is connected to the first laser-gas introducing port and the second laser-gas introducing port.

The gas laser oscillation method of the present disclosure has a first laser-gas introducing step, a circulating step, a laser oscillating step, and a second laser-gas introducing step. In the first laser-gas introducing step, laser gas is introduced into the laser oscillator. In the circulating step, the laser-gas circulation passage connected to the laser oscillator circulates the laser gas in the laser oscillator. In the laser oscillating step, voltage is applied to the laser oscillator to excite the laser gas. In the second laser-gas introducing step, laser gas is introduced into the laser-gas circulation passage. Upon detecting laser oscillation in the laser oscillating step, the second laser-gas introducing step starts, and after a lapse of a predetermined period, the second laser-gas introducing step ends.

The gas laser processing machine of the present disclosure has the gas laser oscillation apparatus described previously, a reflective mirror, a torch, and a table. The reflective mirror reflects off laser beams supplied from the gas laser oscillation apparatus. The torch has a condensing lens that collects the laser beams reflected off the reflective mirror. The table holds a workpiece to be radiated with the laser beams collected by the condensing lens.

The gas laser oscillation apparatus, the gas laser oscillation method, and the gas laser processing machine of the present disclosure increase the amount of laser gas in the laser oscillator with no need for increasing an amount of laser gas introduced in the periphery of the total reflective mirror and the partial reflective mirror of the laser oscillator. This allows the gas laser oscillation apparatus to quickly output stable laser beams even at restarting the apparatus.

### BRIEF DESCRIPTION OF DRAWINGS

FIG. 1 is a block diagram of a gas laser oscillation apparatus in accordance with a first exemplary embodiment.
FIG. 2 is a flowchart showing the operation procedures of a laser-gas supply device in accordance with the first exemplary embodiment.
FIG. 3 is a block diagram of a gas laser processing machine using the gas laser oscillation apparatus of the first exemplary embodiment.
FIG. 4 is a block diagram of a gas laser oscillation apparatus in accordance with a second exemplary embodiment.
FIG. 5 is a block diagram of a gas laser oscillation apparatus in accordance with the second exemplary embodiment.
FIG. 6 is a block diagram of a conventional gas laser oscillation apparatus.

### DESCRIPTION OF EMBODIMENTS

The exemplary embodiments of the present invention will be described hereinafter with reference to the accompanying drawings.

### EXEMPLARY EMBODIMENT 1

First, the gas laser oscillation apparatus of the first exemplary embodiment will be described below.

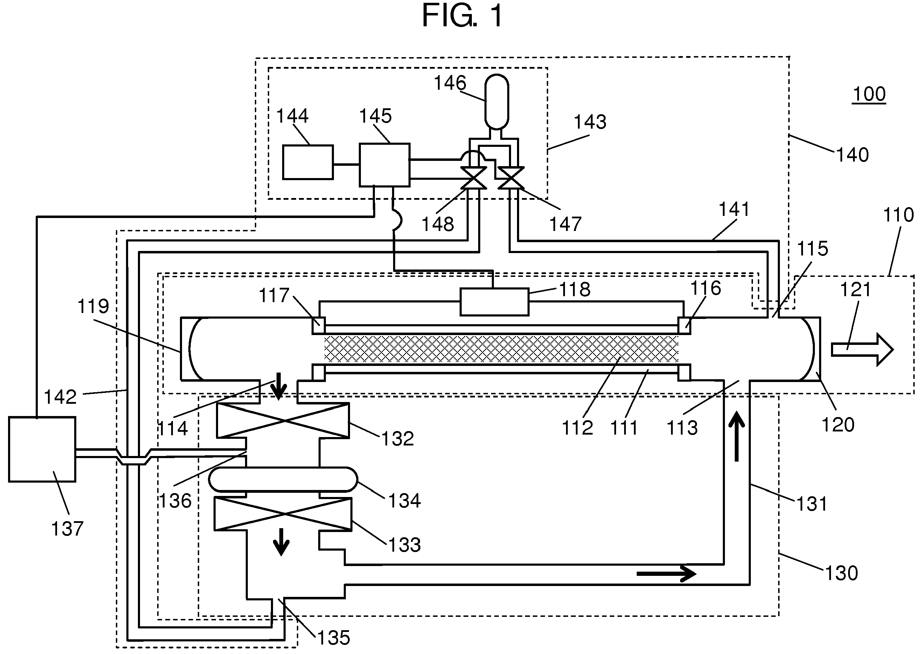

FIG. 1 is a block diagram of axial-flow type gas laser oscillation apparatus 100 of the embodiment. As shown in FIG. 1, axial-flow type gas laser oscillation apparatus 100 is formed of laser oscillator 110, laser-gas circulation section 130, and laser-gas introducing section 140.

Laser oscillator 110 has discharge tube 111 formed of dielectric material such as glass. The inside of discharge tube 111 forms discharge section 112. Laser oscillator 110 has discharge section 112, laser-gas inlet 113 (as a first laser-gas inlet), laser-gas outlet 114 (as a first laser-gas outlet), and laser-gas introducing port 115 (as a first laser-gas introducing port).

In discharge section 112, discharge is generated by electrode 116 (as a first electrode) and electrode 117 (as a second electrode) disposed outside discharge tube 111. Power source 118 applies high voltage between electrode 116 and electrode 117, generating discharge in discharge section 112. The discharge excites laser gas in discharge section 112, causing laser oscillation. Laser oscillator 110 has total reflective mirror 119 at one end (first end) and partial reflective mirror 120 at the other end (second end). Laser-gas inlet 113 is disposed between discharge section 112 and partial reflective mirror 120, while laser-gas outlet 114 is disposed between discharge section 112 and total reflective mirror 119. Laser-gas introducing port 115 is disposed closer to partial reflective mirror 120 than laser-gas inlet 113 is.

The laser oscillated in discharge section 112 resonates between total reflective mirror 119 and partial reflective mirror 120. Upon exceeding a predetermined amount of energy, the laser goes outside laser oscillator 110 as laser beam 121 through partial reflective mirror 120. Laser beam 121 is used, for example, for laser processing.

Laser-gas circulation section 130 is connected to laser oscillator 110 so as to supply it with laser gas via laser-gas inlet 113 and so as to emit laser gas from it via laser-gas outlet 114.

Laser-gas circulation section 130 has laser-gas circulation passage 131, heat exchangers 132, 133, blower 134, laser-gas introducing port 135 (as a second laser-gas introducing port), laser-gas exhaust port 136, and exhaust pump 137.

Laser-gas circulation passage 131 includes the total structure from laser-gas inlet 113 to laser-gas outlet 114. The following components are disposed on laser-gas circulation passage 131 in the order named from the side of laser-gas outlet 114: heat exchanger 132, laser-gas exhaust port 136, blower 134, heat exchanger 133, laser-gas introducing port 135. Laser gas heated by discharge in laser oscillator 110 and operation of blower 134 is cooled down by heat exchangers 132, 133. Blower 134 circulates laser gas from laser-gas outlet 114 toward laser-gas inlet 113, allowing the laser gas to flow at a speed of approximately 100 m/sec in discharge section 112.

Laser-gas introducing section 140 has laser-gas introducing passage 141, laser-gas introducing passage 142, and laser-gas introducing device 143. Laser-gas introducing passage 141 is connected to laser-gas introducing port 115, while laser-gas passage 142 is connected to laser-gas introducing port 135. Laser-gas introducing device 143 has timer 144, controller 145, laser-gas tank 146, and valves 147, 148. Laser-gas introducing passage 141 is connected to laser-gas tank 146 through valve 147 (as a first valve); similarly, laser-gas introducing passage 142 is connected to laser-gas tank 146 through valve 148 (as a second valve). Controller 145 is connected to timer 144, valves 147, 148, power source 118, and exhaust pump 137 so as to control them.

As described above, the gas laser oscillation apparatus of the embodiment has laser-gas introducing port 135 through which laser gas is introduced into laser-gas circulation passage 131, in addition to laser-gas introducing port 115 through which laser gas is introduced into laser oscillator 110. At a restart operation of a gas laser oscillation apparatus (even after long-term no operation), the aforementioned structure allows to increase the flow volume of laser gas in laser oscillator 110 more than that used in normal operation, while maintaining the amount of laser gas introduced into laser oscillator 110 the same as that used in normal operation. With the structure above, gas laser oscillation apparatus 100 of the embodiment provides output of laser beams with stability shortly after restart of the apparatus.

Next, a gas laser oscillation method of the embodiment will be described below.

During the normal operation of gas laser oscillation apparatus 100, laser oscillator 110, laser-gas circulation section 130, and laser-gas introducing section 140 work as follows.

In laser oscillator 110, power source 118 applies high voltage to first electrode 116 and second electrode 117. The application of voltage excites laser gas in discharge section 112, causing laser oscillation. The laser oscillated in discharge section 112 has resonance between total reflective mirror 119 and partial reflective mirror 120. Upon exceeding a predetermined amount of energy, the laser goes outside laser oscillator 110 as laser beam 121 through partial reflective mirror 120.

Laser-gas introducing section 140 opens valve 147 and closes valve 148, so that fresh laser gas is supplied, through laser-gas introducing port 115 only, to laser oscillator 110.

Laser-gas circulation section 130 opens laser-gas exhaust port 136 to exhaust degraded laser gas outside laser-gas circulation passage 131. The laser gas to be exhausted at that time is as much as the newly introduced laser gas supplied from laser-gas introducing port 115. In this way, degraded laser gas is replaced with fresh one with no changes in internal pressure of laser oscillator 110. Besides, operating heat exchangers 132, 133 and blower 134 allows cooled laser gas to be supplied into the laser oscillator at a constant speed.

In normal operation, as described above, laser oscillator 110 has laser oscillation with stability by cooling laser gas and replacing degraded gas with fresh one, so that gas laser oscillation apparatus 100 outputs laser beam 121 with stability.

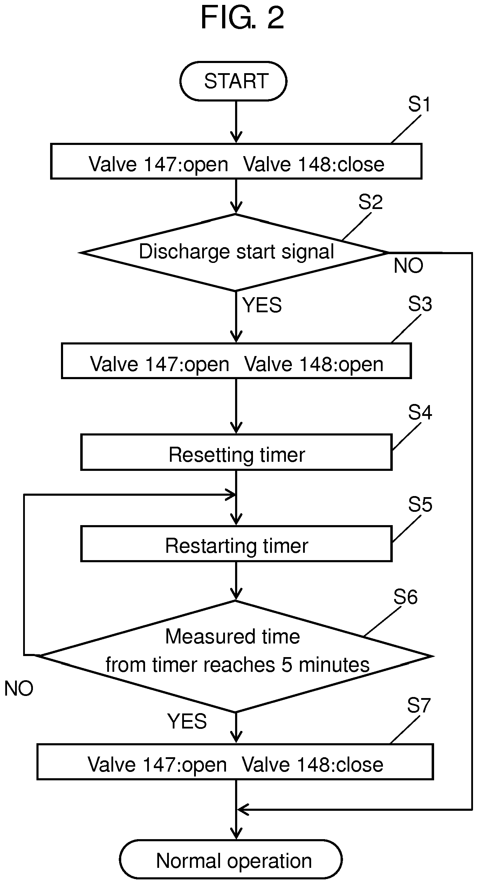

Next, the description below is on a gas laser oscillation method for restarting gas laser oscillation apparatus 100 after long-term no use. The method is described with reference to FIG. 2.

If gas laser oscillation apparatus 100 has no operation for a long time, impurities including water molecules build up in laser oscillator 110, causing instable discharge. Therefore, at the restart of gas laser oscillation apparatus 100, until the impurities are removed, the flow volume of laser gas in laser oscillator 110 has to be increased more than that used in normal operation. The structure of the embodiment determines that, at the restart of operation, the flow volume of laser gas in laser oscillator 110 is more than five times as much as that in normal operation, and the increased flow volume is maintained for five minutes.

First, as shown in step S1 of FIG. 2, laser-gas introducing section 140 opens valve 147 so that laser gas flows through laser-gas introducing port 115 into laser oscillator 110. Meanwhile, like in the normal operation, in laser-gas circulation section 130, heat exchangers 132, 133, blower 134, and exhaust pump 137 start the operation, and laser-gas exhaust port 136 opens.

Next, as shown in step S2 of FIG. 2, controller 145 controls power source 118 of laser oscillator 110 to apply high voltage between first electrode 116 and second electrode 117. Power source 118 sends a discharge start signal—it shows presence or absence of discharge in discharge section 112—to controller 145. Until detecting the start of discharge, controller 145 introduces laser gas through laser-gas introducing port 115 into laser oscillator 110; at the same time, laser-gas circulation section 130 circulates laser gas.

Upon a discharge starts in discharge section 112, as shown in step S3 of FIG. 2, controller 145 opens valve 148 to introduce laser gas through laser-gas introducing port 135 into laser-gas circulation passage 131. At the same time, controller 145 increases the rotation speed of exhaust pump 137 so as to increase the amount of laser gas exhausted through laser-gas exhaust port 136.

Through the control above, an increased volume of laser gas more than that in normal operation is supplied to discharge section 112 and laser-gas circulation passage 131, so that the flow volume of laser gas in discharge section 112 increases. Specifically, the laser gas introduced through laser-gas introducing port 135 is increased to four times as much volume as that introduced through laser-gas introducing port 115. At approximately the same time, the laser gas to be exhausted through laser-gas exhaust port 136 is increased to five times as much volume as that in normal operation. This allows discharge section 112 and laser-gas circulation passage 131 to have laser gas five times as much volume as that in normal operation. During the procedures above, the internal pressure of laser gas in discharge section 112 has almost no increase.

As shown in step S4 of FIG. 2, upon opening valve 148, controller 145 resets timer 144. As shown in step S5 of FIG. 2, timer 144 restarts and measures time from the reset moment, thereby sending the measured time to controller 145. As shown in step S6 of FIG. 2, if the measured time from timer 144 is smaller than five minutes, controller 145 maintains valve 148 open.

As shown in step S7 of FIG. 2, upon the measured time from timer 144 reaches five minutes, controller 145 closes valve 148, and gas laser oscillation apparatus 100 returns to normal operation (with control procedures described previously).

As described above, at restart of a gas laser oscillation apparatus after long-time no use, the gas laser oscillation method of the embodiment increases the laser gas in laser oscillator 110 to about five times as much volume as that used in normal operation, while maintaining the amount of laser gas introduced into laser oscillator 110 the same as that used in normal operation. With the gas laser oscillation method described above, a gas laser oscillation apparatus—even after long-term no use—outputs laser beams with quickly recovered stability.

Next, the gas laser processing machine of the embodiment will be described.

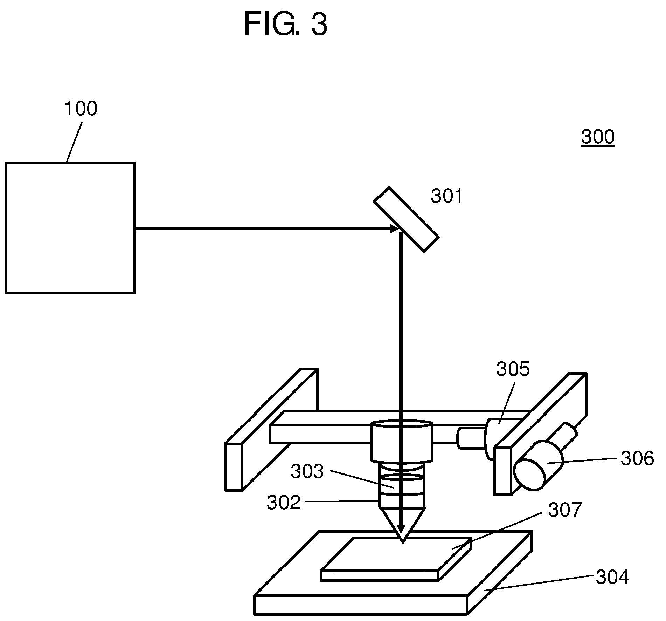

As shown in FIG. 3, gas laser processing machine 300 of the embodiment has gas laser oscillation apparatus 100, reflective mirror 301, torch 302, condensing lens 303 in torch 302, table 304, X-axis motor 305, and Y-axis motor 306. With the structure above, gas laser processing machine 300 processes, i.e., performs welding or cutting on workpiece 307 mounted on table 304.

The processing by gas laser processing machine 300 will be described. Laser beams supplied from gas laser oscillation apparatus 100 reflects off reflective mirror 301 and travels toward condensing lens 303 disposed in torch 302. Condensing lens 303 collects the incident laser beams and sends them onto workpiece 307. Torch 302 is moved by X-axis motor 305 and Y-axis motor 306 to a position according to an intended shape of workpiece 307 to be processed. Instead of moving torch 302, table 304 may be moved to a position according to an intended shape of workpiece 307 to be processed.

### EXEMPLARY EMBODIMENT 2

Next, a gas laser oscillation apparatus of the second exemplary embodiment will be described.

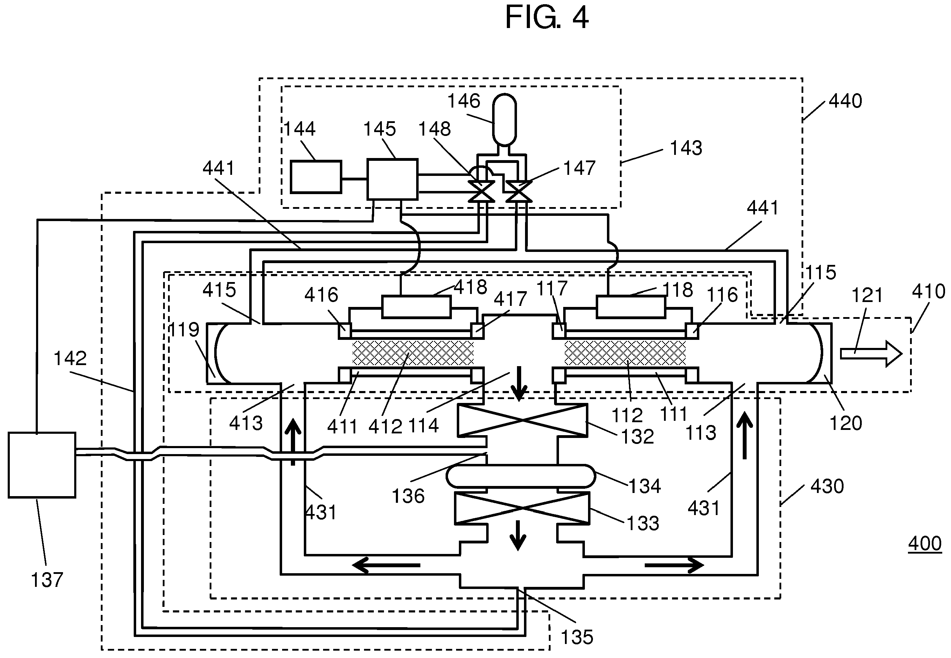

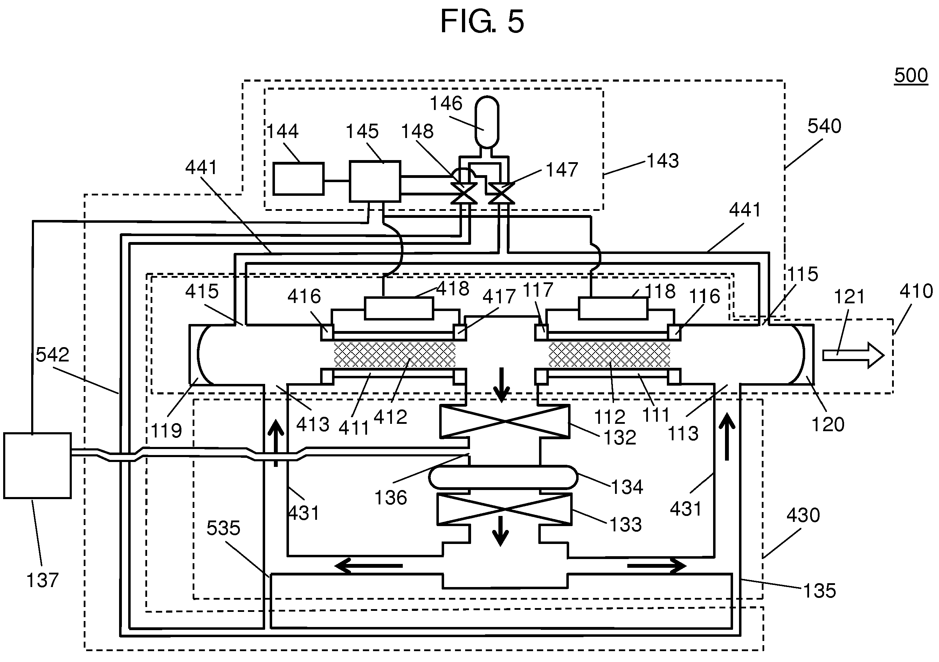

FIG. 4 is a block diagram of axial-flow type gas laser oscillation apparatus 400 in accordance with the second exemplary embodiment. FIG. 5 is a block diagram of another axial-flow type gas laser oscillation apparatus 500 of the exemplary embodiment. In the figures above, like parts similar to the structure of gas laser oscillation apparatus 100 of the first exemplary embodiment have the same reference marks and the descriptions thereof will be omitted.

Gas laser oscillation apparatus 400 differs from gas laser oscillation apparatus 100 in the following respects.

As shown in FIG. 4, laser oscillator 410 of gas laser oscillation apparatus 400 has the structure of laser oscillator 110 of gas laser oscillation apparatus 100, plus the following components: discharge tube 411 (as a second discharge tube); discharge section 412 (as a second discharge section); laser-gas inlet 413 (as a second laser-gas inlet); laser-gas introducing port 415 (as a third laser-gas introducing port); electrode 416 (as a third electrode); electrode 417 (as a fourth electrode); and power source 418 (as a second power source). Controller 145 controls power sources 118 and 418. Laser-gas outlet 114 is disposed between discharge tube 111 and discharge tube 411. The structure on the side of discharge tube 111 and the structure on the side of discharge tube 411 are symmetrically arranged with respect to laser-gas outlet 114.

In laser-gas circulation section 430, laser-gas circulation passage 431 is separated into two lines at a downstream part of heat exchanger 133, and the separated two lines are each connected to laser-gas inlets 113 and 413. Similarly, in laser-gas introducing section 440, laser-gas introducing passage 441 is separated into two lines at a downstream part of valve 147, and the separated two lines are each connected to laser-gas introducing ports 115 and 415.

Gas laser oscillation apparatus 400 has discharge sections 112, 412 in its right and left, and two laser-gas inlets 113, 413 and two laser-gas introducing ports 115, 415. With the structure above, the amount of laser gas passing through each port decreases, which suppresses a turbulent flow of laser gas.

Gas laser oscillation apparatus 500 differs from gas laser oscillation apparatus 400 in the following respects.

According to laser-gas introducing section 540 of gas laser oscillation apparatus 500, as shown in FIG. 5, laser-gas introducing passage 542 is separated into two lines. The two lines of laser-gas introducing passage 542 are connected to laser-gas introducing port 135 and laser-gas introducing port 535 (as a fourth laser-gas introducing port) disposed in laser-gas circulation passage 431 that is also separated into two. With the structure above, fresh laser gas uniformly introduced into the right and the left of the structure, with no influence of the gas flow from heat exchanger 133.

Instead of gas laser oscillation apparatus 100, gas laser oscillation apparatuses 400 and 500 can be used for the gas laser processing machine shown in FIG. 3.

In the structures described in the first and the second exemplary embodiments, laser-gas introducing ports 115 and 415 may be a slit formed along a side surface of laser oscillator 110. Such a slit-like port allows laser gas to flow along the entire side surface into the inside of laser oscillator 110, suppressing a turbulent flow of laser gas introduced through laser-gas introducing ports 115 and 415.

### INDUSTRIAL APPLICABILITY

According to the gas laser oscillation apparatus, the gas laser oscillation method, and the gas laser processing machine of the present disclosure, the apparatus outputs quickly stabilized laser beams, even at its restart operation, which is useful for cutting and welding.

### REFERENCE MARKS IN THE DRAWINGS

- 100, 400, 500, 900: gas laser oscillation apparatus
- 110, 410: laser oscillator
- 111, 411, 901: discharge tube
- 112, 412: discharge section
- 113, 413: laser-gas inlet
- 114, 414: laser-gas outlet
- 115, 135, 415, 535: laser-gas introducing port
- 116, 117, 416, 417, 902, 903: electrode
- 118, 418, 904: power source
- 119, 906: total reflective mirror
- 120, 907: partial reflective mirror
- 121: laser beam
- 130, 430: laser-gas circulation section
- 131, 431: laser-gas circulation passage
- 132, 133, 910, 911: heat exchanger
- 134, 912: blower
- 136: laser-gas exhaust port
- 137: exhaust pump
- 140, 440, 540: laser-gas introducing section
- 141, 142, 441, 542: laser-gas introducing passage
- 143: laser-gas introducing device
- 144: timer
- 145: controller
- 146: laser-gas tank
- 147, 148: valve
- 300: gas laser processing machine
- 301: reflective mirror
- 302: torch
- 303: condensing lens
- 304: table
- 305: X-axis motor
- 306: Y-axis motor
- 307: workpiece
- 905: discharge space
- 908: laser beam
- 909: laser-gas passage
- 913: arrow
- 914a: total-reflective-mirror holder
- 914b: partial-reflective-mirror holder
- 915: non-discharge tube
- 916: copper ring
- 917: laser-gas introducing section
- 918: joint tube
- 919: laser-gas supply device

## Claims

1. A gas laser oscillation apparatus comprising:
a laser oscillator including:
one of a total reflective mirror and a partial reflective mirror disposed at a first end;
an other of the total reflective mirror and the partial reflective mirror disposed at a second end opposite to the first end; and
a first discharge tube for exciting laser gas;
a first laser-gas inlet disposed between the first end and the first discharge tube for supplying the laser oscillator with laser gas;
a laser gas outlet disposed between the second end and the first discharge tube for emitting laser gas from the laser oscillator;
a first laser-gas introducing port disposed between the first end and the first discharge tube for introducing laser gas into the laser oscillator;
a laser-gas circulation passage that connects the first laser-gas inlet to the laser-gas outlet:
a second laser-gas introducing port disposed in the laser-gas circulation passage for introducing laser gas into the laser-gas circulation passage; and
a laser-gas introducing section connected to the first laser-gas introducing port and the second laser-gas introducing port.

2. The gas laser oscillation apparatus according to claim 1 further comprising a blower disposed at the laser-gas circulation passage for circulating laser gas from the laser-gas outlet toward the first laser-gas inlet,
wherein the second laser-gas introducing port is disposed between the blower and the first laser-gas inlet.

3. The gas laser oscillation apparatus according to claim 2 further comprising a laser-gas exhaust port disposed in the laser-gas circulation passage for exhausting laser gas from the laser-gas circulation passage,
wherein the laser-gas exhaust port is disposed between the blower and the laser-gas outlet.

4. The gas laser oscillation apparatus according to claim 2 or claim 3 further comprising:
a first heat-exchanger disposed between the laser-gas outlet and the blower in the laser-gas circulation passage; and
a second heat-exchanger disposed between the first laser-gas inlet and the blower in the laser-gas circulation passage.

5. The gas laser oscillation apparatus according to any one of claim 1 through claim 4, wherein the first laser-gas introducing port is disposed between the first laser-gas inlet and the first end.

6. The gas laser oscillation apparatus according to any one of claim 1 through claim 5, further comprising:
a second discharge tube disposed between the laser-gas outlet and the second end, for exciting laser gas;
a second laser-gas inlet disposed between the second end and the second discharge tube, for supplying the laser oscillator with laser gas; and
a third laser-gas introducing port disposed between the second end and the second discharge tube, for introducing laser gas into the laser oscillator,
wherein the laser-gas circulation passage is connected to the second laser-gas inlet.

7. The gas laser oscillation apparatus according to claim 6 further comprising a fourth laser-gas introducing port disposed in the laser-gas circulation passage for introducing laser gas into the laser-gas circulation passage,
wherein the fourth laser-gas introducing port is disposed between the laser-gas outlet and the second laser-gas introducing port.

8. A gas laser oscillation method, comprising:
a first laser-gas introducing step of introducing laser gas into a laser oscillator;
a circulating step of circulating laser gas in the laser oscillator with a laser-gas circulation passage connected to the laser oscillator;
a laser oscillation step of exciting laser gas by applying voltage to the laser oscillator; and
a second laser-gas introducing step of introducing laser gas into the laser-gas circulation passage,
wherein, upon detecting laser oscillation in the laser oscillation step, the second laser-gas introducing step starts, and after a lapse of a predetermined period, the second laser-gas introducing step ends.

9. A gas laser processing machine comprising:
a gas laser oscillation apparatus described in claim 1 through claim 7;
a reflective mirror for reflecting laser supplied from the gas laser oscillation apparatus;
a torch having a condensing lens for collecting the laser reflected off the reflective mirror; and
a table for holding a workpiece to be radiated with the laser collected by the condensing lens.
